# EUROPEAN PATENT APPLICATION

(11) **EP 3 454 391 A1**
(43) Date of publication of application: **13.03.2019**
(21) Application number: 18193901.8
(22) Date of filing: 11.09.2018
(51) Int. Cl.: H01M 2/02, H01M 2/04, H01M 2/10, B60K 1/04

(54) **ATTACHMENT STRUCTURE OF LID BODY OF BATTERY CONTAINER**

(30) Priority: 11.09.2017 JP 2017174280
(71) Applicant: MITSUBISHI JIDOSHA KOGYO KABUSHIKI KAISHA, Minato-ku Tokyo 108-8410 (JP)
(72) Inventor: NAKAMORI, Yoji, Minato-ku, Tokyo 108-8410 (JP); YANAGI, Kenji, Minato-ku, Tokyo 108-8410 (JP); MATSUSHIMA, Kentaro, Minato-Ku, Tokyo 108-8410 (JP)
(74) Representative: Regimbeau

(57) **Abstract**

An attachment structure of a lid body of a battery container includes a container main body (12), a lid body (14) made of a metal, an anticorrosive covering material (52) to be applied to the lid body (14), a container edge section (22) to be provided along an outer circumference of a storage section (20) of the container main body (12), a lid body edge section (32) to be provided along an outer circumference of the lid body (14), an engaging tools (40) configured to engage the lid body (14) with the container main body (12) with a predetermined gap, a fixing section (16) configured to fix the lid body (14) to the container main body (12).

## Description

The present invention relates to an attachment structure of a lid body of a battery container configured to accommodate therein drive batteries of an electric vehicle.

In an electrically driven vehicle, drive batteries are accommodated in, for example, a battery container and, the battery container is fixed to an under-floor part or the like. In the battery container, a lid body is placed on a container body accommodating therein the drive batteries with a gasket arranged around the circumference of the lid body, thereby sealing the container body tightly. In recent years, in order to cope with an abnormal state where the temperature of the drive batteries rises, there is a demand that the reliability of the battery container be improved by changing the material for the lid body from resin to metal.

The battery container attached to the under-floor part of the vehicle is splashed with muddy water or the like while the vehicle is running and, there is sometimes a case where mud accumulates on the top surface of the lid body. Further, in a cold weather region, the battery container is sometimes splashed with water containing a chloride for freeze proofing scattered on the road surface while the vehicle is running. When mud contains a chloride, the mud becomes liable to firmly adhere to the lid body, and furthermore has a strong corrosive effect on the metal, and hence a danger that the mud damages the metallic lid body is conceivable. Thus, covering the metallic lid body with a resin covering material in order to securely prevent the lid body from being rusted is considered.

On the one hand, conventionally, the lid body is fastened with screws through a gasket or the like. When a covering material is provided on the surface of the lid body and the screws are tighten through the covering material, fastening of the screws becomes insufficient due to the covering material, and fixation of the lid body becomes uncertain.

On the other hand, although it is conceivable that a covering material is not provided at parts to which the screws come into contact, and the screws are made to come into direct contact with the lid body, a danger that rust occurs at parts not covered with the covering material to thereby damage the lid body is conceivable.

It is an object of the present invention to provide an attachment structure of a metallic lid body preventing rust from occurring in a battery container.

In order to solve the above problem, an attachment structure of a lid body of a battery container has the following structure. An attachment structure of a lid body of a battery container includes: a container main body in which drive batteries of a vehicle are accommodated; a lid body made of a metal and to be attached to the container main body; an anticorrosive covering material to be applied to a top surface of the lid body; a container edge section to be provided along an outer circumference of a storage section of the container main body; a lid body edge section to be provided along an outer circumference of the lid body to correspond to the container edge section; an engaging tools resting upon a top surface of the lid body edge section and configured to engage the lid body with the container main body with a predetermined gap held between the container edge section and the lid body edge section; a fixing section provided between the container edge section and the lid body edge section and configured to fix the lid body to the container main body.

According to the attachment structure of a lid body of a battery container of the present invention, it is possible to attach a metallic lid body to a container main body without rust occurring, and provide a battery container with high degrees of heat-resisting properties and durability.

The invention can be more fully understood from the following detailed description when taken in conjunction with the accompanying drawings, in which:
FIG. 1 is a perspective exploded view in which a battery container having an attachment structure of a lid body according to the present invention is disassembled.
FIG. 2 is a cross-sectional view showing the attachment structure of the lid body of the battery container.
FIG. 3 is a cross-sectional view showing the attachment structure of the lid body of the battery container.
FIG. 4 is a perspective view showing attachment of the battery container to a vehicle.

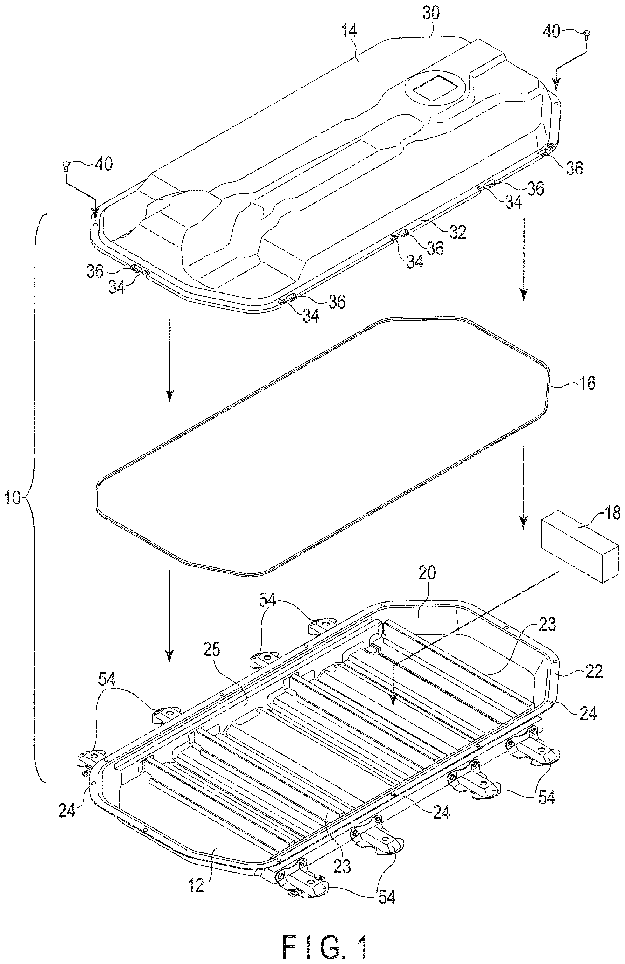

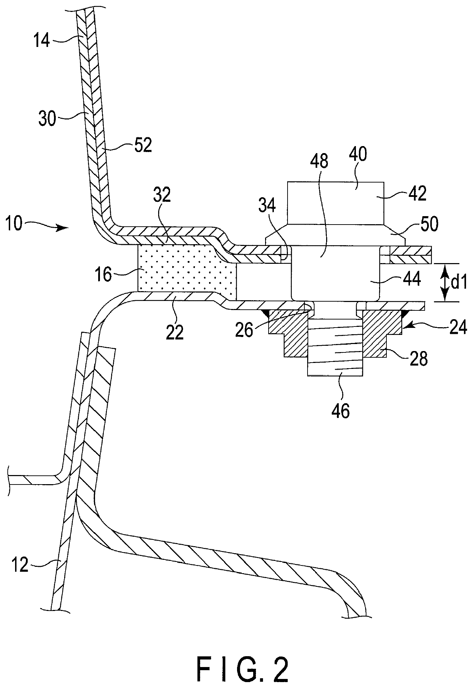

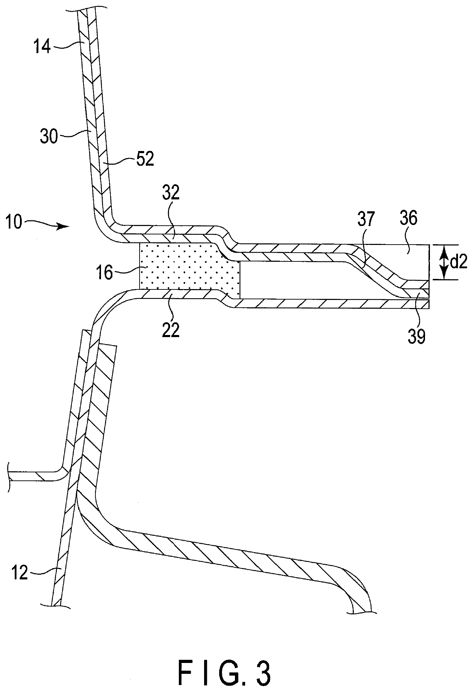

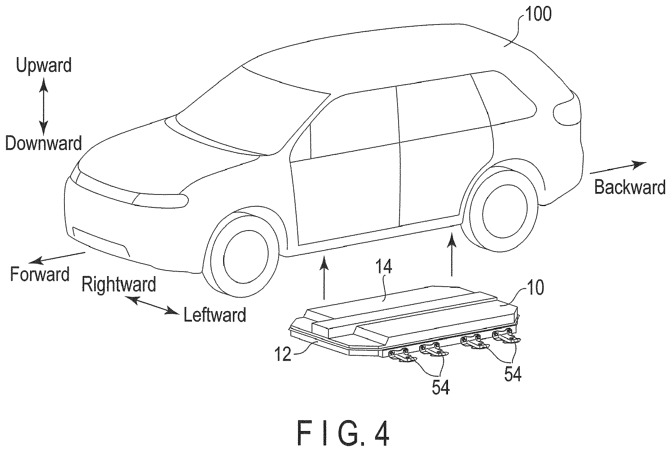

An attachment structure of a lid body of a battery container according to the present invention will be described below by taking a battery container 10 as an example. FIG. 1 is a perspective exploded view in which the battery container 10 is disassembled. Each of FIG. 2 and FIG. 3 is a cross-sectional view showing the attachment part of the lid body 14 in a cutaway manner. FIG. 4 is a perspective view showing a vehicle 100 to which the battery container 10 is to be attached.

The battery container 10 is provided with a container main body 12, lid body 14, and fixing section 16 as shown in FIG. 1, and is attached to the vehicle 100 from below the vehicle 100 as shown in FIG. 4. The vehicle 100 is an electric vehicle provided with a motor for travelling, and travelling by driving the motor with electric power to be supplied from the drive batteries.

Hereinafter, with respect to the battery container 10, the front of the battery container 10 is determined on the basis of the front of the vehicle 100 shown in FIG. 4, and then the rear, right, and left will be determined with reference to the front. Further descriptions will be given assuming that the direction of gravity is the downward direction, a direction opposite to the gravity is defined as the upward direction and, furthermore, direction from the circumference of the battery container 10 toward the center thereof is defined as the inward direction or the inside and, direction or position opposite to the inward direction or inside is defined as the outward direction or outside.

As shown in FIG. 1, the battery container 10 is provided with the container main body 12, lid body 14, fixing section 16, and bolts 40. Inside the battery container 10, a plurality of battery modules 18 are accommodated.

Next, constituent members constituting the battery container 10 will be described below. The container main body 12 is provided with a downwardly concave storage section 20, and container edge section 22 formed around the circumference of the storage section 20. Basically, the container main body 12 is constituted of a metallic material, and the surface thereof has been subjected to predetermined anticorrosive treatment. For example, the container main body 12 is integrally formed by stamping a metallic plate.

The storage section 20 has a predetermined area inside, and partition plates 23 and reinforcing plate 25 and the like are provided inside the storage section 20. The partition plates 23 are attached to the storage section 20 according to the arrangement of the battery modules 18 and, inside a part partitioned by the partition plates 23, a plurality of battery modules 18 are stored leaving almost no space.

The container edge section 22 outwardly extends from the upper edge of the storage section 20. The container edge section 22 is provided at the upper edge of the storage section 20 throughout the whole circumference of the upper edge. The container edge section 22 is provided with female thread sections 24.

The female thread section 24 is shown in FIG. 2. FIG. 2 is a partial cross-sectional view showing the cross section obtained by cutting the battery container 10 along a plane passing the female thread section 24. The female thread sections 24 are each provided with holes 26 and female threads 28 and, are provided on the undersurface side of the container edge section 22 at appropriate intervals. The female thread 28 has a threaded hole corresponding to a bolt 40 to be described later, and is fixed to the container edge section 22 by welding or caulking or the like in accordance with the position of the hole 26. The female thread 28 is a so-called weld nut.

The lid body 14 is provided with a lid body main body section 30 and lid body edge section 32 provided around the circumference of the lid body main body section 30. The lid body 14 is formed of a metallic material. As the metallic material, basically an iron material is used from the viewpoint of strength, cost, mechanical processing and the like. It should be noted that other materials may also be used.

The circumference of the lid body main body section 30 is formed in accordance with the shape of the storage section 20. When the lid body 14 is placed on the container main body 12, each of the lid body main body section 30 and storage section 20 has an almost identical shape. The lid body main body section 30 is provided with some upwardly protruding sections on the top surface thereof. It should be noted that the lid body main body section 30 may also have a flat top surface.

The lid body edge section 32 outwardly extends from the outer circumference of the lid body main body section 30. The lid body edge section 32 is formed in such a manner as to approximately overlap the container edge section 22 in the vertical direction when the lid body 14 is attached to the container main body 12. The lid body edge section 32 is provided with a plurality of bolt holes 34 and a plurality of concave sections 36.

The bolt holes 34 are provided to correspond to the female thread sections 24 provided in the container edge section 22. When the lid body 14 is attached to the container main body 12, the bolt holes 34 and holes 26 of the female thread sections 24 are vertically coincident with each in terms of position. In the bolt holes 34, bolts 40 are inserted.

The bolt 40 is provided with a head section 42 and body section 44. The head section 42 is a normal hexagon head and includes a flange section 50 at a lower part thereof. The flange section 50 outwardly extends from the lower part of the head section 42.

The body section 44 is provided with a threaded section 46 and shank section 48. In the threaded section 46, a male thread is formed. The male thread of the threaded section 46 is engaged with the female thread 28 of the female thread section 24. The shank section 48 is continuous with the threaded section 46, and is formed concentric with the threaded section 46. The diameter of the shank section 48 is made larger than the diameter of the threaded section 46. The bolt 40 is a so-called stepped flange bolt having a flange section 50 at the head section 42 thereof, and having a step greater than the threaded section 46 between the threaded section 46 and shank section 48.

The bolt hole 34 of the lid body 14 has a diameter larger than the diameter of the body section 44 of the bolt 40 and smaller than the flange section 50 of the head section 42. The bolt holes 34 are provided in the lid body edge section 32 of the lid body 14 at, for example, ten to fifteen positions. Incidentally, in the conventional battery container utilizing a gasket for sealing, in a similar battery container 10, bolt holes are provided at thirty or more positions, and the lid body is fixed to the container main body by the fastening force of the bolts.

The concave sections 36 are provided in the vicinities of the bolt holes 34. As shown in FIG. 3, the concave section 36 is downwardly concave from the lid body edge section 32, i.e., is concave toward the container edge section 22 side. FIG. 3 is a partial cross-sectional view showing the cross section obtained by cutting the battery container 10 along a plane passing the concave section 36.

The concave section 36 has wall plates 37 on three sides, has a bottom plate 39 on the undersurface thereof, and is formed by, for example, stamping. The depth d2 of the concave section 36 has a dimension slightly shorter than the gap d1 to be formed by the fastening of the bolts 40 between the container edge section 22 of the container main body 12 and lid body edge section 32 of the lid body 14. That is, the concave section 36 has such a depth that, when the lid body 14 is attached to the container main body 12 by means of the bolts 40, the bottom plate 39 and container edge section 22 are opposed to each other with a certain gap held between them.

Furthermore, the lid body 14 is provided with an anticorrosive covering material 52 on the surface thereof. The covering material 52 is provided at least on the whole top surface of the lid body 14 in a predetermined thickness. An example of the thickness of the covering material 52 is about 1 mm to 2 mm. The covering material 52 is also provided on the lid body edge section 32 in the same manner. For example, the covering material 52 is formed by applying a resin material to the surface of the lid body 14.

Incidentally, the underside of the lid body 14 may be subjected to treatment equivalent to the top surface of the lid body 14 or to anticorrosive treatment higher than the above treatment. The fixing section 16 is provided between the container main body 12 and lid body 14.

The fixing section 16 is provided along the upper edge of the storage section 20. The fixing section 16 has airtightness and water resisting property, and fixes the container main body 12 and lid body 14 to each other. The fixing section 16 is provided along the whole circumference of the upper edge of the container edge section 22 in a seamless way, and isolates the inside of the container main body 12 from the outside.

The fixing section 16 is formed of an adhesive. For example, an adhesive is applied to the lid body edge section 32 by means of an ejection gun in a predetermined thickness, and then the lid body 14 is placed on the container main body 12, whereby the fixing section 16 is formed. The adhesive is applied in a thickness not less than the gap d1 (see FIG. 2) to be formed between the container edge section 22 and lid body edge section 32 in the state where the lid body 14 is engaged with the container main body 12 by means of the bolts 40. When hardened, the adhesive has such strength as to securely fix the lid body 14 to the container main body 12. The fixing section 16 is the adhesive in the state where the adhesive is hardened at a part between the container main body 12 and lid body 14.

The battery module 18 (see FIG. 1) is an aggregate constituted of a plurality of electric cells, and is a battery for driving the vehicle 100. A plurality of battery modules 18 are accommodated in the battery container 10. When the battery modules 18 are accommodated in the battery container 10, the battery container 10 is attached to the frame or the like of the vehicle 100 from beneath the vehicle 100 as shown in FIG. 4. For example, brackets 54 laterally extending on the right and left sides of the battery container 10 are attached to the side frame or the like extending in the front-back direction on both the right and left sides of the vehicle 100.

Next, the function and advantage in the attachment structure of the lid body 14 will be described below. The container main body 12 is formed by stamping or the like. The formed container main body 12 is subjected to appropriate anticorrosive treatment. The battery modules 18 are accommodated in the container main body 12. The battery modules 18 are fixed to the container main body 12. When the battery modules 18 are accommodated in the container main body 12, the lid body 14 is attached to the container main body 12.

In the attachment of the lid body 14, first, an adhesive is applied to the lid body 14. The adhesive is applied to the lid body edge section 32 throughout the whole circumference thereof. The adhesive is applied to the lid body edge section 32 in a predetermined thickness. The adhesive immediately after application still has flexibility.

The lid body 14 to which the adhesive has been applied is put on the container main body 12. The bolts 40 are inserted in the bolt holes 34, and the threaded sections 46 are engaged with the female thread sections 24. The lid body 14 is in contact with the head sections 42 of the bolts 40, and is made closer to the container main body 12 while pressing itself against the adhesive applied to the lid body edge section 32. The adhesive is pressed against the lid body 14, whereby the adhesive is gradually crushed.

When the threaded sections 46 of the bolts 40 are completely engaged with the female threads 28 of the female thread sections 24, lower ends of the shank sections 48 come into contact with the female threads 28, and the screwing operation of the bolts 40 is stopped. The shank section 48 of the bolt 40 has a predetermined length, and hence even when the bolt 40 is completely screwed into the female thread section 24, a gap d1 is provided between the container edge section 22 of the container main body 12 and lid body edge section 32 of the lid body 14.

Thereby, the adhesive is filled into the part between the lid body edge section 32 of the lid body 14 and container edge section 22. The adhesive is provided at the part between the container edge section 22 of the container main body 12 and lid body edge section 32 of the lid body 14 leaving no space and hardens after an elapse of a predetermined period of time. What is obtained when the adhesive hardens is the fixing section 16.

The lid body 14 is fixed to the container main body 12 by means of the fixing section 16 based on the adhesive throughout the whole circumference of the container edge section 22. Thereby, in the battery container 10, high waterproofing property and dust resistance are realized. The lid body 14 is engaged with the head sections 42 of the bolts 40, and hence does not come off the container main body 12. Further, even if suppress strength is applied to the lid body 14 from above, and the fixing section 16 is downwardly deformed, the concave sections 36 come into contact with the container edge section 22, whereby the gap between the lid body 14 and container main body 12, i.e., the height of the fixing section 16 is not reduced to a height less than or equal to the depth d2 of the concave sections 36.

The bolt 40 comes into contact with the top surface of the lid body 14 at a large area through the flange section 50 provided on the head section 42. Accordingly, the contact area between the bolt 40 and lid body 14 is increased, and the contact pressure applied to the lid body 14 from the bolts 40 is reduced.

Further, the lid body 14 is not fastened to the container main body 12 by the bolts 40 with direct strong tightening force. Accordingly, the covering material 52 does not receive strong force from the head sections 42 of the bolts 40.

For this reason, although the lid body 14 is fixed to the container main body 12 by means of the bolts 40, the covering material 52 of the lid body 14 is not easily exfoliated by the bolts 40, and the anticorrosive effect on the lid body 14 owing to the covering material 52 is maintained for a long period of time.

As described above, the attachment structure according to the present invention has the following advantages. By virtue of the metallic lid body 14, heat-resisting properties and durability of the battery container 10 are improved. The battery container 10 can be prevented from being broken in case of a collision of the vehicle 100. The lid body 14 is covered with the covering material 52, and hence a high anticorrosive effect can be obtained. Accordingly, even when mud or a snow-melting agent adheres to the top surface of the lid body 14, rust can be prevented from occurring, and the lifetime of the battery container 10 can be extended for a long period of time.

The container main body 12 and lid body 14 are fixed to each other by means of the fixing section 16 (adhesive), and hence high waterproofing property and dust resistance are imparted to the inside of the battery container 10. No great force is applied from the bolts 40 to the covering material 52 of the lid body 14, and hence the covering material 52 is not exfoliated from the lid body 14 by the bolts 40 while in use. Accordingly, the anticorrosive effect on the lid body 14 owing to the covering material 52 can be maintained for a long period of time. Further, by virtue of the concave sections 36, the gap between the lid body 14 and container main body 12 is maintained, and damage or the like to the fixing section 16 (adhesive) can securely be prevented from occurring.

Further, the gap d1 is provided between the container main body 12 and lid body 14, and hence after the bolts 40 are removed from the battery container 10, it is possible to insert an edged tool into the gap d1 between the container main body 12 and lid body 14 to break the fixing section 16. By breaking the fixing section 16 vertically, it is possible to remove the lid body 14 from the container main body 12, inspect the inside of the battery container 10, and exchange or repair the drive batteries accommodated in the battery container 10.

When the inspection and the like of the battery container 10 is completed, an adhesive is applied again to the lid body 14, the lid body 14 is placed on the container main body 12, and the bolts 40 are attached thereto. Thereby, the battery container 10 can be sealed up.

Now, although the present invention has been described above, the present invention is not limited to the embodiment, and may appropriately be changed without changing the gist of the invention. For example, the shank section 48 may not be thicker than the threaded section if the shank section 48 can stop the screwing operation of the threaded section 46. In place of the bolts 40, engaging tools such as clips may also be employed if a gap d1 can be formed between the container edge section 22 and lid body edge section 32. The adhesive may be applied to the container edge section 22.

## Claims

1. An attachment structure of a lid body of a battery container **characterized by** comprising:
a container main body (12) in which drive batteries of a vehicle are accommodated;
a lid body (14) made of a metal and to be attached to the container main body (12);
an anticorrosive covering material (52) to be applied to a top surface of the lid body (14);
a container edge section (22) to be provided along an outer circumference of a storage section (20) of the container main body (12); and
a lid body edge section (32) to be provided along an outer circumference of the lid body (14) to correspond to the container edge section (22), further comprising:
an engaging tools (40) resting upon a top surface of the lid body edge section (32) and configured to engage the lid body (14) with the container main body (12) with a predetermined gap held between the container edge section (22) and the lid body edge section (32); and
a fixing section (16) provided between the container edge section (22) and the lid body edge section (32) and configured to fix the lid body (14) to the container main body (12).

2. The attachment structure of a lid body of a battery container according to Claim 1, **characterized in that**
the engaging tool (40) is a stepped bolt (40) including a head section (42), a threaded section (46), and further including a shank section (48) with a diameter greater than the threaded section (46) between the head section (42) and the threaded section (46).

3. The attachment structure of a lid body of a battery container according to Claim 1, **characterized in that**
the fixing section (16) is formed of an adhesive applied to a part between the container edge section (22) and the lid body edge section (32).

4. The attachment structure of a lid body of a battery container according to Claim 3, **characterized in that**
the adhesive applied to the fixing section (16) is applied in a thickness not less than the predetermined gap to be formed between the container edge section (22) and the lid body edge section (32).
